# EUROPÄISCHE PATENTSCHRIFT

(11) **EP 0 573 539 B1**
(45) Veröffentlichungstag und Bekanntmachung des Hinweises auf die Patenterteilung: **17.05.1995**
(21) Anmeldenummer: 92906444.2
(22) Anmeldetag: 25.02.1992
(51) Int. Cl.: F16J 15/32

(54) **DICHTUNGSANORDNUNG**
SEALING ARRANGEMENT
DISPOSITIF D'ETANCHEITE

(30) Priorität: 27.02.1991 DE 4106159
(43) Veröffentlichungstag der Anmeldung: 15.12.1993
(73) Patentinhaber: Busak + Shamban GmbH & Co., D-70565 Stuttgart (DE)
(72) Erfinder: BÖHLER, Wolfgang, D-7000 Stuttgart 80 (DE)
(74) Vertreter: KOHLER SCHMID + PARTNER
(86) Internationale Anmeldenummer: DE9200152
(87) Internationale Veröffentlichungsnummer: WO9215807

(56) Entgegenhaltungen:
- EP-A- 0 362 510
- DE-A- 2 325 000
- DE-A- 3 225 906
- DE-A- 3 606 886
- DE-U- 8 018 485

## Beschreibung

Die Erfindung geht aus von einer Dichtungsanordnung für hydraulische Kolben oder Kolbenstangen mit einem Dichtring aus einem zähelastischen Kunststoff als Berührungsdichtung zwischen einem ruhenden und einem bewegten in einem profilierten Abschnitt angeordneten Maschinenteil und einem den Dichtring radial spannenden und abdichtenden auf einer Mantelfläche des Dichtringes zumindest teilweise aufliegenden Vorspannelement, wobei der Dichtring eine der Hochdruckseite H zugewandte Dichtkante aufweist, die von einer am Dichtring vorhandenen Stufe gebildet wird, und daß von der Dichtkante ausgehend eine zur Niederdruckseite N hin sich unter einem kleinen Keilwinkel öffnende Umfangsfläche vorgesehen ist, der von einer Anlagefläche des Maschinenbauteils und der Umfangsfläche begrenzt ist, und daß der Dichtring an einer ersten Flanke des profilierten Abschnitts anliegt.

Eine derartige Dichtungsanordnung ist durch die DE-A-23 25 000 bekanntgeworden.

Ein besonderer Vorteil der bekannten Dichtung besteht darin, daß sich die Größe des Keilwinkels in Abhängigkeit vom Druck des abzudichtenden Mediums selbsttätig auf einen günstigen Wert einstellt, weil durch die Beaufschlagung des Spannringes mit dem abzudichtenden Medium die resultierende Kraft des Spannringes in Bezug auf die Dichtkante zur Niederdruckseite hin verschoben wird und ein gewisses Kippmoment entsteht, welches bestrebt ist, den niederdruckseitigen Keilwinkel zu vermindern. Diese einseitige Belastung des Dichtringes wird umso größer, je hoher der Mediumdruck ist, je höher also hochdruckseitig die Wirkung des Spannringes aufgehoben wird. Damit wird der Keilwinkel kleiner und in Folge dessen seine rückschleppende Wirkung umso größer, je größer der Medium-druck ist.

Insbesondere unter extremen Betriebsbedingungen, insbesondere bei hohen Temperaturen, kommt es im Material des Dichtringes zu Ermüdungserscheinungen, die zur Folge haben, daß sich der Dichtring im Laufe der Zeit mit seiner Umfangsfläche an die Anlagefläche vollständig anlegt. Die Folge davon ist, daß die hohe Flächenpressung an der der Hochdruckseite zugewandten Dichtkante verloren geht und die rückschleppende Wirkung des Keilspaltes nicht mehr vorhanden ist. Die Wirkung der Dichtung nimmt also ab, und es tritt auch ein sehr schneller Verschleiß des Dichtringes ein, wenn er mit seiner Umfangsfläche an der Anlagefläche anliegt.

Weiterhin ist aus DE-A-32 25 906 eine Dichtungsanordnung bekannt, bei der die Mantelfläche des Dichtringes über die gesamte axiale Länge des Dichtringes parallel zur Achse des Dichtringes verläuft. Auch bei dieser Anordnung kann es vorkommen, daß der Dichtring aufgrund eines großen Medium-druckes um die Dichtkante als Drehpunkt zur Niederdruckseite hin kippt, und daß dann die ansonsten herausragende Dichtwirkung dieses Dichtringes nicht mehr gegeben ist. Liegt der Dichtring gekippt mit seiner gesamten zur Anlagefläche hinweisenden Fläche niederdruckseitig von der Dichtkante aus gesehen, auf der Anlagefläche auf, so steigen die Reibwerte und die Temperaturen im abzudichtenden Bereich, und die Lebensdauer eines solchen Dichtringes ist dann sehr gering.

Schließlich ist auch noch aus DE-U-80 18 485.6 bekannt, die Mantelfläche über die gesamte axiale Länge des Dichtringes zur Achse des Dichtringes und zur Niederdruckseite hin zu neigen, um dem bekannten Kippmoment entgegenwirken zu können. Es hat sich gezeigt, daß auch diese Maßnahme nicht zu dem gewünschten Erfolg führt.

Der Erfindung liegt daher die Aufgabe zugrunde, eine Dichtungsanordnung vorzustellen, die auch bei höheren Drücken lagestabil im profilierten Abschnitt angeordnet ist und sich weitgehend druckunabhängig durch eine dauerhafte und zuverlässige Dichtfunktion auszeichnet.

Diese Aufgabe wird erfindungsgemäß dadurch gelöst, daß die Mantelfläche aus mindestens einem ersten und einem zweiten Flächenabschnitt gebildet ist, wobei der an die erste Flanke grenzende zweite Flächenabschnitt einen radial gesehen im Mittel kleineren Abstand zur Anlagefläche aufweist als der erste Flächenabschnitt.

Die erfindungsgemäße Dichtungsanordnung hat damit den wesentlichen Vorteil, daß das Vorspannelement bei ansteigenden Drücken des abzudichtenden Mediums nicht mehr in unmittelbarer Abhängigkeit auf den niederdruckseitigen Randbereich des Dichtringes derart einwirken kann, daß der Dichtring aus einer funktionstüchtigen und vorgesehenen Einbaulage gekippt wird. Über viele Jahre hat man versucht, diesem "Kippphänomen" dadurch zu begegnen, daß man am niederdruckseitigen Ende des Dichtringes einen radial vergrößerten Abschnitt vorsah. Bei derartig bekannten Dichtringen stellten sich jedoch andere Schwierigkeiten, die sich beim Einbau und bei der Fertigung solcher Dichtringe zeigten, ein.

Bei der erfindungsgemäßen Dichtungsanordnung verschiebt sich das Vorspannelement bei ansteigendem Druck geführt in einen Freiraum und kann deshalb über einen gewissen axialen Abschnitt radial wirkende Kräfte nicht vollständig auf den erfindungsgemäßen Dichtring übertragen. Dabei ist es entscheidend und erfindungswesentlich, daß das Vorspannelement bei einer axialen Verschiebung in Richtung Niederdruckseite unterschiedlich im Abstand zur Dichtringachse geführt wird. Eine lediglich axiale Verschiebung entlang einer Mantelfläche, die entweder parallel zur Dichtringachse oder geneigt zur Dichtringachse verläuft, ist nicht ausreichend.

Eine gute druckunabhängige Lagestabilität des erfindungsgemäßen Dichtringes wird stets erreicht, obwohl die radialgerichtete Anlagefläche an der ersten Flanke kleiner ist als bei bekannten Dichtringen.

Besonders vorteilhaft ist es, wenn sich der erste Flächenabschnitt axial gesehen mindestens über zwei Drittel der axialen Länge des Dichtringes erstreckt. Damit kann erreicht werden, daß das maximale Kippmoment nicht oder nur unvollständig von dem Vorspannelement auf den erfindungsgemäßen Dichtring übertragen wird.

In weiterer Ausgestaltung der Erfindung geht der erste Flächenabschnitt in einem stetigen und/oder unstetigen oder in einem sprunghaften Verlauf in den zweiten Flächenabschnitt über. Dies hat den Vorteil, daß auch bei unterschiedlichsten Ausführungen von Vorspannelementen, wie O-Ringen, mehrfach hintereinander angeordneten O-Ringen, quadratischen oder rechteckförmigen Spannringen bzw. Schlauchfedern, der erfindunsmäßige Dichtring derart an diese Vorspannelemente anzupassen ist, daß stets die Wirkungsweise des Kerns der Erfindung erhalten bleibt.

Weitere Vorteile ergeben sich aus der Beschreibung und der beigefügten Zeichnung. Ebenso können die vorstehend genannten und die noch weiter aufgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter.

Die Erfindung ist in der Zeichnung dargestellt und wird anhand von Ausführungsbeispielen näher erläutert. Es zeigen:
- Fig. 1: eine Ausführungsform einer erfindungsgemäßen Dichtungsanordnung im Querschnitt mit einem O-Ring als Vorspannelement und einer Mantelfläche, die unterschiedliche Steigungen aufweist;
- Fig. 2: einen Querschnitt durch eine erfindungsgemäße Dichtungsanordnung mit einem Vierlippen-Dichtring als Vorspannelement und einer Mantelfläche, die unterschiedlich weit beabstandete Ebenen zur Dichtringachse aufweist;
- Fig. 3: einen Querschnitt durch ein weiteres Ausführungsbeispiel einer erfindungsgemäßen Dichtungsanordnung mit einer besonders vorteilhaft ausgebildeten Dichtkante und einem Vorspannelement, das sich aus einem O-Ring und einem halben O-Ring zusammensetzt;
- Fig. 4: einen Querschnitt durch eine erfindungsgemäße Dichtungsanordnung mit einer im Unterschied zu den vorangegangenen Ausführungsformen unterschiedlich ausgebildeten Stufe im Mantelbereich eines erfindungsgemäßen Dichtrings.

Die einzelnen Figuren der Zeichnung zeigen teilweise stark schematisiert den erfindungsgemäßen Gegenstand und sind nicht maßstäblich zu verstehen. Die Gegenstände der einzelnen Figuren sind teilweise stark vergrößert dargestellt, damit ihr Aufbau besser gezeigt werden kann.

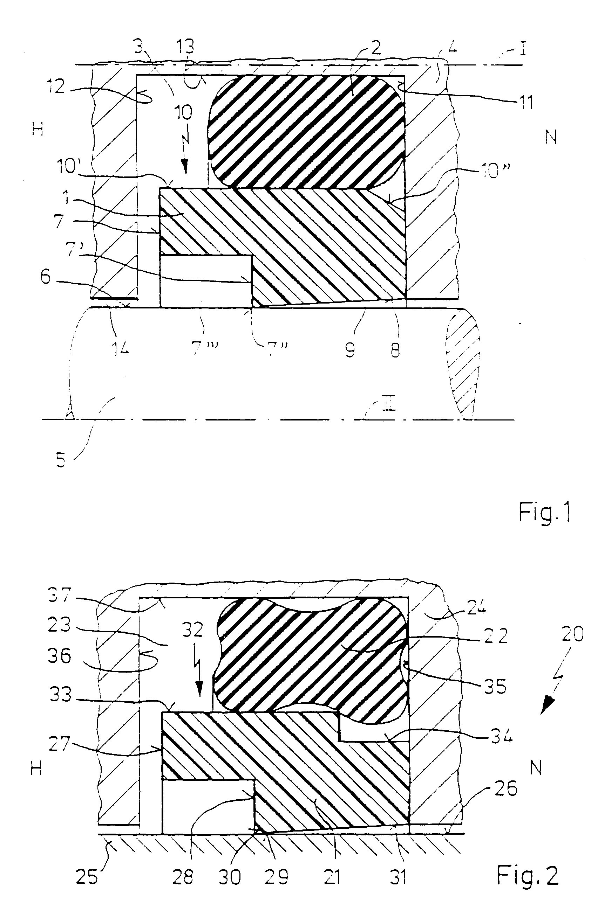

Die in Fig. 1 dargestellte Dichtungsanordnung besteht aus einem aus zähelastischem Kunststoff bestehenden Dichtring 1 und einem konzentrisch zum Dichtring 1 angeordneten Vorspannelement 2. Der Dichtring 1 und das Vorspannelement 2 befinden sich in einem profilierten Abschnitt 3 eines ersten Maschinenbauteiles 4, das in der Lage ist, gegenüber einem zweiten Maschinenbauteil 5 eine Relativbewegung auszuführen. Der Dichtring 1 liegt an einer Anlagefläche 6 des zweiten Maschinenbauteiles 5 an. Die Dichtungsanordnung ist zur Achse I oder zur Achse II rotationssymmetrisch. Ist die Achse I die Symmetrieachse, handelt es sich um eine Kolbendichtung. Ist dagegen die Achse II die Symmetriachse, so handelt es sich um eine Stangendichtung.

Der Dichtring 1 weist, in axialer Richtung gesehen, eine erste Stirnfläche 7 und eine zweite Stirnfläche 7′ auf, die eine Stufe bilden, so daß eine der Hochdruckseite H zugewandte Dichtkante 7˝ entsteht, an die sich ein zur Hochdruckseite H hin offener, verhältnismäßig großer Zwischenraum 7′′′ zwischen dem Dichtring 1 und dem abzudichtenden zweiten Maschinenbauteil 5 anschließt. An die Dichtkante 7˝ grenzt zur Niederdruckseite N hin eine Umfangsfläche 8, die unter einem kleinen Winkel zur Anlagefläche 6 konisch geneigt ist, so daß dort ein sich zur Niederdruckseite N hin öffnender, im Querschnitt keilförmiger Raum 9 vorhanden ist. Die Dichtkante 7˝ ist aus der Schnittlinie der zweiten Stirnfläche 7′ und der Umfangsfläche 8 gebildet.

Die von dem Vorspannelement 2 belastete Mantelfläche 10 des Dichtringes 1 setzt sich aus einem ersten Flächenabschnitt 10′ und einem zweiten Flächenabschnitt 10′′ zusammen, wobei der zweite Flächenabschnitt 10˝ eine Kegelfläche mit zur Umfangsfläche 8 entgegengesetzter Neigung bildet. Der Keilwinkel zwischen der Achse II und der Umfangsfläche 8 beträgt bevorzugt 5° bis 15°. Der sich zwischen der Achse I und der Fläche des zweiten Flächenabschnitts 10˝ aufspannende Winkel beträgt bevorzugt 10° bis 60°. Im Ausführungsbeispiel der Fig. 1 beträgt die axiale Länge des ersten Flächenabschnittes 10′ 80 % von der gesamten axialen Länge des Dichtringes 1.

Der Dichtring 1 liegt unter Druck an einer ersten Flanke 11 des profilierten Abschnittes 3 an. Der Dichtring 1 wie auch das Vorspannelement 2 ist unter Druck von einer zweiten Flanke 12 des profilierten Abschnittes 3 beabstandet. Die erste und die zweite Flanke 11, 12 sind über einen Nutgrund 13 miteinander verbunden. Der profilierte Abschnitt 3 ist in der Fig. 1 als Rechtecknut ausgebildet.

Mit der aus dem Dichtring 1 und dem Vorspannelement 2 bestehenden Dichtungsanordnung wird ein Spalt 14 zwischen dem ruhenden ersten Maschinenbauteil 4 und einem sich bewegenden zweiten Maschinenbauteil 5 abgedichtet. Der auf der Hochdruckseite H herrschende Druck des Mediums dringt ungedrosselt in den profilierten Abschnitt 3 des Maschinenbauteiles 4 ein und belastet das Vorspannelement 2, das innerhalb des profilierten Abschnittes 3 bis an dessen niederdruckseitige erste Flanke 11 verschoben und dabei komprimiert wird. Dadurch verschiebt sich in gewünschter Weise in Abhängigkeit vom Mediumdruck die resultierende Kraft des Vorspannelementes 2 in Bezug auf die Dichtkante 7˝, und es entsteht ein von der Größe des Anpreßdruckes abhängiges Kippmoment, welches bestrebt ist, bei zunehmendem Mediendruck den keilförmigen Raum 9 zu verkleinern. Die Erweiterung des Raumes zwischen dem zweiten Flächenabschnittes 10˝ des Dichtringes 1 und dem Nutgrund 13 gewährleistet jedoch, daß die von dem Vorspannelement 2 ausgeübte Kraft im Bereich der Dichtkante 7˝ erhalten bleibt, so daß das Kippmoment niemals so groß wird, daß es den Dichtring 1 aus der funktionstüchtigen Lage kippen kann. Im Randbereich an der ersten Flanke 11 läuft das Vorspannelement 2, hier ein gummielastischer O-Ring, ins Leere. Das an der ersten Flanke 11 maximal wirkende Kippmoment kann auf den Dichtring 1 nicht vollständig übertragen werden, so daß die kraftschlüssigen Reibungskräfte zwischen dem Dichtring 1 und der ersten Flanke 11 ausreichend sind, um den Dichtring 1 weitgehend druckunabhängig über einen weiten Druckbereich in der in der Fig. 1 gezeigten Lage zu halten.

Bei dem dargestellten Ausführungsbeispiel wird als Vorspannelement 2 ein O-Ring verwendet. Stattdessen kann auch ein gummielastischer Vierlippen-Dichtring oder ein Spannring mit rechteckigem oder quadratischem Querschnitt oder aber auch ein Nutring verwendet werden. Das Vorspannelement 2 hat gummielastische Eigenschaften und ist aus einem Werkstoff, der gegenüber den abzudichtenden Medien bei den herrschenden Temperaturen beständig ist. Der Dichtring 1 ist bevorzugt aus einem Kunststoff auf der Basis von Polytetrafluorethylen, der gegebenenfalls mit geeigneten Füllstoffen, wie Glasfasern oder dergleichen, angereichert sein kann, gefertigt.

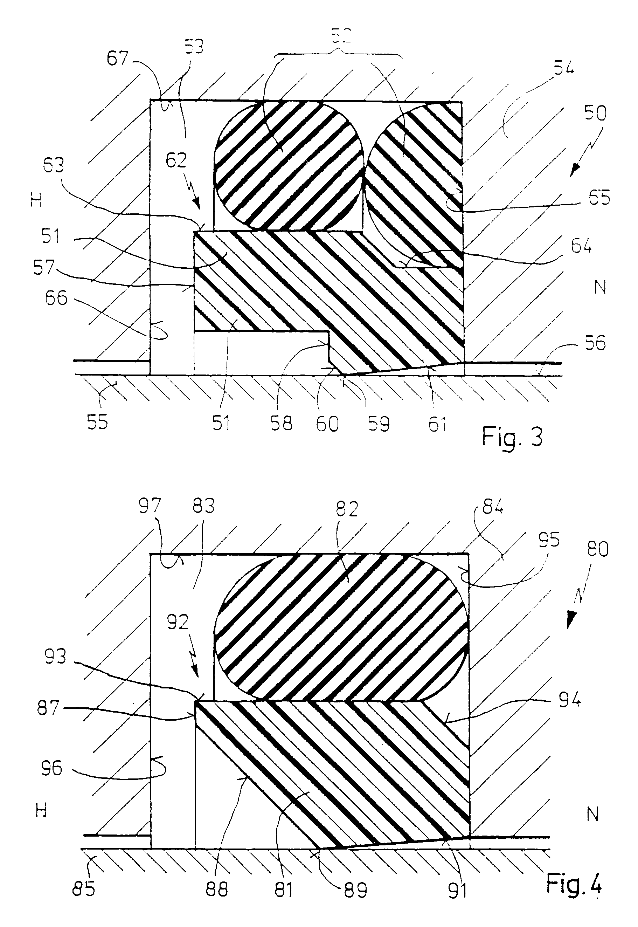

Fig. 2 zeigt eine Dichtungsanordnung 20, die sich aus einem Dichtring 21 und aus einem Vorspannelement 22 zusammensetzt. Der Dichtring 21 und das Vorspannelement 22 sind in einem profilierten Abschnitt 23 eines ersten Maschinenbauteiles 24 axial fixiert. An das erste Maschinenbauteil 24 grenzt beabstandet ein zweites Maschinenbauteil 25 mit einer Anlagefläche 26 an, an der der Dichtring 21 dichtend anliegt.

Der Dichtring 21 weist eine erste Stirnfläche 27 und eine zweite Stirnfläche 28 auf, die zur Hochdruckseite H hinweisen. Eine Dichtkante 29 des Dichtringes 21 ist aus der Schnittlinie einer Kegelfläche 30 und einer Umfangsfläche 31 gebildet. Die Kegelfläche 30 weist zur Hochdruckseite H hin und ist mit der zweiten Stirnfläche 28 verbunden. Die Umfangsfläche 31 weist unter einem sich öffnenden Keilwinkel zur Niederdruckseite hin. Die sich von der Dichtkante 29 aus ergebenden Winkel zur Hochdruckseite H bzw. Niederdruckseite N hin sind aus der DE-A-32 25 906 bekannt und sind auch an dem Dichtring 21 der Fig. 2 verwirklicht.

Das Vorspannelement 22 liegt über eine Mantelfläche 32 auf dem Dichtring 21 teilweise auf. Die Mantelfläche 32 setzt sich aus einem ersten Flächenabschnitt 33 und einem zweiten Flächenabschnitt 34 zusammen. Die Flächenabschnitte 33, 34 sind unterschiedlich weit von der Achse des Dichtringes 21 beabstandet. Der erste Flächenabschnitt 33 ist über eine senkrecht zur Achse des Dichtringes gerichtete Fläche mit dem zweiten Flächenabschnitt 34 verbunden. Der Dichtring 21 liegt unter Druck an einer ersten Flanke 35 des profilierten Abschnittes 23 an. Von einer zweiten Flanke 36, die zusammen mit einem Nutgrund 37 den profilierten Abschnitt 23 bildet, ist der Dichtring 21 beabstandet.

Zwischen dem Nutgrund 37 und der Mantelfläche 32 ist als Vorspannelement 22 in der Fig. 2 ein Vierlippen-Dichtring angeordnet, der gummielastische Eigenschaften aufweist. Der zur Niederdruckseite hinweisende Teil des gummielastischen Vierlippen-Dichtringes greift in einen Absatz, der sich durch die unterschiedliche Lage des ersten Flächenabschnitts zum zweiten Flächenabschnitt bildet, und kann sich bei einer axialen Verschiebung in Richtung zur Niederdruckseite N hin in diesem Freiraum derart ausdehnen, daß er Vorspannkräfte in diesem Bereich nicht unmittelbar in voller Größe auf den Dichtring 21 überträgt.

Fig. 3 zeigt ein weiteres Ausführungsbeispiel einer Dichtungsanordnung 50. Ein Dichtring 51 und ein Vorspannelement 52 ist in einem profilierten Abschnitt 53 eines ersten Maschinenbauteiles 54 angeordnet, an das ein zweites Maschinenbauteil 55 beabstandet grenzt. An einer Anlagefläche 56 des zweiten Maschinenbauteiles 55 liegt der Dichtring 51 dichtend an.

Der Dichtring 51 weist eine erste Stirnfläche 57 und eine zweite Stirnfläche 58 auf, die zur Hochdruckseite H hingerichtet sind. Eine Dichtkante 59 des Dichtringes 51 wird aus der Schnittlinie einer Kegelfläche 60 und einer Umfangsfläche 61 gebildet. Die Kegelfläche 60 weist einen zur Hochdruckseite hin sich öffnenden Keilwinkel auf und die Umfangsfläche 51 bildet einen sich öffnenden Keilwinkel zur Niederdruckseite N hin. Die Größe der Winkel sind aus der DE-A-32 25 906 bekannt.

Auf einer Mantelfläche 62 des Dichtringes 51 ist das Vorspannelement 52 angeordnet, das in der Fig. 3 aus einem O-Ring und einem halben O-Ring gebildet ist. Das Vorspannelement 52 weist gummielastische Eigenschaften auf. Die Mantelfläche 62 unterteilt sich in einen ersten Flächenabschnitt 63 und in einen zweiten Flächenabschnitt 64, die über eine zur Achse des Dichtringes schräg verlaufende Fläche miteinander verbunden sind. An einer ersten Flanke 65 des profilierten Abschnittes 53 liegt unter Druck sowohl der Dichtring 51 wie die plane Seite des halben O-Ringes des Vorspannelementes 52 an. Unter Druck ist der Dichtring 51 und das Vorspannelement 52 von einer zweiten Flanke 66 des profilierten Abschnittes 53 beabstandet. Die erste Flanke 65 und die zweite Flanke 66 sind über einen Nutgrund 67 verbunden, an dem sich auch das Vorspannelement 52 abstützt. Der sich zwischen den beiden Maschinenbauteilen 54, 55 ergebende Spalt wird mit der Dichtungsanordnung 50 abgedichtet. Bei steigendem Druck kann sich der halbe O-Ring ungehindert radial solange ausbreiten, bis er an den zweiten Flächenabschnitt 64 stößt, d.h. im drucklosen Zustand kann der halbe O-Ring auch vom zweiten Flächenabschnitt 64 beabstandet sein.

Fig. 4 zeigt in einem Ausführungsbeispiel eine Dichtungsanordnung 80, wie sie mit einem Dichtring 81 und einem Vorspannelement 82 in einem profilierten Abschnitt 83 eines ersten Maschinenbauteiles 84 axial fixiert angeordnet ist. Das erste Maschinenbauteil 84 grenzt an ein davon beabstandetes zweites Maschinenbauteil 85 mit einer Anlagefläche 86.

Der Dichtring 81 weist mit einer ersten Stirnfläche 87 zur Hochdruckseite hin, die in eine ebenfalls zur Hochdruckseite hinweisende schräg zur Achse des Dichtringes 81 verlaufende zweite Stirnfläche 88 übergeht. Eine Dichtkante 89 des Dichtringes 81 ist hier aus der Schnittlinie der zweiten Stirnfläche 88 und einer Umfangsfläche 91 gebildet. Die zweite Stirnfläche 88 weist unter einem sich öffnenden Winkel zur Hochdruckseite hin, und die Umfangsfläche 91 weist unter einem sich öffnenden Winkel zur Niederdruckseite hin. Die Winkelgrößen sind aus der DE-A-32 25 906 bekannt.

Der Dichtring 81 weist eine Mantelfläche 92 auf, die sich aus einem ersten Flächenabschnitt 93 und einem zweiten Flächenabschnitt 94 zusammensetzt. Der erste Flächenabschnitt 93 läuft parallel zur Achse des Dichtringes 81, der zweite Flächenabschnitt 94 ist zur Achse des Dichtringes 81 geneigt. Im Ausführungsbeispiel der Fig. 4 setzt sich die axiale Länge des Dichtringes 81 aus der axialen Länge des ersten Flächenabschnitts 93 und des zweiten Flächenabschnittes 94 zusammen. Der erste Flächenabschnitt 93 ist dabei axial gerichtet sehr lang gehalten, während der zweite Flächenabschnitt 94 in seiner axialen Erstreckung sehr kurz ist.

Der Dichtring 81 liegt unter Druck an einer ersten Flanke 95 des profilierten Abschnittes 83 an und ist unter Druck von einer zweiten Flanke 96 des profilierten Abschnittes 83 beabstandet. Der profilierte Abschnitt 83 ist in der Figur als Rechtecknut mit einem Nutgrund 97 ausgebildet, an dem sich das Vorspannelement 82 abstützt. Bei ansteigendem Druck wird das Vorspannelement 82, ein gummielastischer Spannring, axial in Richtung zur Niederdruckseite N hin verschoben und kann dabei teilweise in den Raum ausweichen, der sich durch die zur Achse des Dichtringes 81 geneigten zweiten Flächenabschnittes 94 ergibt. Kräfte vom Vorspannelement 82 ausgehend werden im Bereich der ersten Flanke 95 stark vermindert auf den Dichtring 81 übertragen.

## Patentansprüche

1. Dichtungsanordnung für hydraulische Kolben oder Kolben stangen mit einem Dichtring (1; 21; 51; 81) aus einem zähelastischen Kunststoff als Berührungsdichtung zwischen einem ruhenden und einem bewegten in einem profilierten Abschnitt (3; 23; 53; 83) angeordneten Maschinenteil (4, 5; 24, 25; 54, 55; 84, 85) und einem den Dichtring (1; 21; 51; 81) radial spannenden und abdichtenden auf einer Mantelfläche (10; 32; 62; 92) des Dichtringes (1; 21; 51; 81) zumindest teilweise aufliegenden Vorspannelement (2; 22; 52; 82), wobei der Dichtring (1; 21; 51; 81) eine der Hochdruckseite H zugewandte Dichtkante (7˝; 29; 59; 89) aufweist, die von einer am Dichtring (1; 21; 51; 81) vorhandenen Stufe gebildet wird, und daß von der Dichtkante (7˝; 29; 59; 89) ausgehend eine zur Niederdruckseite N hin sich unter einem kleinen Keilwinkel öffnende Umfangsfläche (8; 31; 61; 91) vorgesehen ist, welcher Keilwinkel von einer Anlagefläche (6; 26; 56; 86) des Maschinenbauteils (5; 25; 55; 85) und der Umfangsfläche (8; 31; 61; 91) begrenzt ist, und daß der Dichtring (1; 21; 51; 81) an der niederdruckseitigen Flanke (11; 35; 65; 95) des profilierten Abschnitts (3; 23; 53; 83) anliegt,
dadurch gekennzeichnet, daß die Mantelfläche (10; 32; 62; 92) des Dichtringes aus mindestens einem ersten und einem zweiten Flächenabschnitt (10′, 10˝; 33, 34; 63, 64; 93, 94) gebildet ist, wobei der an die niederdruckseitige Flanke (11; 35; 65; 95) grenzende zweite Flächenabschnitt (10˝; 34; 64; 94) einen radial gesehen im Mittel kleineren Abstand zur Anlagefläche (6; 26; 56; 86) aufweist als der erste Flächenabschnitt (10′; 33; 63; 93).

2. Dichtungsanordnung nach Anspruch 1, dadurch gekennzeichnet, daß sich der erste Flächenabschnitt (10′; 33; 63; 93) axial gesehen mindestens über zwei Drittel der axialen Länge des Dichtringes (1; 21; 51; 81) erstreckt.

3. Dichtungsanordnung nach einem der Ansprüche 1 oder 2, dadurch gekennzeichnet, daß der erste Flächenabschnitt (10′; 33; 63; 93) in einem stetigen, unstetigen oder sprunghaften Verlauf in den zweiten Flächenabschnitt (10˝; 34; 64; 94) übergeht.

## Claims

1. Sealing arrangement for hydraulic pistons or piston rods having a sealing ring (1; 21; 51; 81) made from a tough elastic plastic serving as a contact seal between a stationary machine component and a movable machine component (4, 5; 24, 25; 54, 55; 84, 85) arranged in a profiled section (3; 23; 53; 83) and with a prestressed element (2; 22, 52; 82) radially tensioning the sealing ring (1; 21; 51; 81) and seating at least partially in a sealing fashion on a casing (10; 32; 62, 92) of the sealing ring (1; 21; 51; 81), whereby the sealing ring (1; 21; 51; 81) exhibits a sealing edge (7˝; 29; 59; 89) facing the high pressure side H which is formed from a step present on the sealing ring (1; 21; 51; 81), and a peripheral surface (8; 31; 61, 91) is provided which extends from the sealing edge (7˝; 29; 59; 89) and opens with a small wedge angle towards the low pressure side N, the wedge angle being defined by a seating surface (6; 26, 56; 86) of the machine component (5; 25; 55; 85) and by the peripheral surface (8; 31; 61; 91), the sealing ring (1; 21; 51; 81) seating on the low pressure sided flank (11; 35, 65; 95) of the profiled section (3; 23; 53; 83), characterized in that the sealing ring casing (10; 32; 62; 92) is formed from at least a first and a second surface section (10′, 10˝; 33, 34; 63, 64; 93, 94), whereby the second surface section (10˝; 34; 64; 94) borders on the low pressure sided flank (11; 35; 65; 95) and exhibits, as viewed radially, a smaller average separation from the seating surface (6; 26, 56; 86) than the first surface section (10′; 33; 63; 93).

2. Sealing arrangement according to claim 1, characterized in that the first surface section (10′; 33; 63; 93), as viewed axially, extends over at least two thirds of the axial length of the sealing ring (1; 21; 51; 81).

3. Sealing arrangement according to one of the claims 1 or 2, characterized in that the first surface section (10′; 33; 63; 93) merges into the second surface section (10˝; 34; 64; 94) in a smooth, unsmooth, or discontinuous fashion.

## Revendications

1. Dispositif d'étanchéité pour des pistons ou des tiges de piston hydrauliques, comportant un anneau d'étanchéité (1; 21; 51; 81) en une matière synthétique viscoélastique, en tant que joint de contact entre un élément de machine fixe et un mobile (4, 5; 24, 25; 54, 55; 84, 85) agencé dans un tronçon profilé (3; 23; 53; 83), et un élément de précontrainte (2; 22; 52; 82) qui serre radialement l'anneau d'étanchéité (1; 21; 51; 81) et qui est appliqué au moins partiellement et de façon étanche sur une surface d'enveloppe (10; 32; 62; 92) de l'anneau d'étanchéité (1; 21; 51; 81), dans lequel l'anneau d'étanchéité (1; 21; 51; 81) présente une arête d'étanchéité (7˝; 29; 59; 89) qui est tournée vers le côté à haute pression H et qui est formée par un gradin présent sur l'anneau d'étanchéité (1; 21; 51; 81), dans lequel, en partant de l'arête d'étanchéité (7˝; 29; 59; 89), il est prévu une surface périphérique (8; 31; 61; 91) qui s'ouvre vers le côté à basse pression N selon un petit angle de coin, cet angle de coin étant délimité par une surface d'appui (6; 26; 56; 86) de l'élément constitutif de machine (5; 25; 55; 85) et par la surface périphérique (8; 31; 61; 91), et dans lequel l'anneau d'étanchéité (1; 21; 51; 81) est appliqué contre le flanc (11; 35; 65; 95), du côté à basse pression, du tronçon profilé (3; 23; 53; 83), caractérisé en ce que la surface d'enveloppe (10; 32; 62; 92) de l'anneau d'étanchéité est formée par au moins un premier et un second tronçon de surface (10′, 10˝; 33, 34; 63, 64; 93, 94), et en ce que le second tronçon de surface (10˝; 34; 64; 94) contigu au flanc (11; 35; 65; 95) du côté à basse pression présente par rapport à la surface d'appui (6; 26; 56; 86) une distance, vue radialement, inférieure au milieu à celle du premier tronçon de surface (10′; 33; 63; 93).

2. Dispositif d'étanchéité suivant la revendication 1, caractérisé en ce que le premier tronçon de surface (10′; 33; 63; 93), vu axialement, s'étend au moins au-delà de deux-tiers de la longueur axiale de l'anneau d'étanchéité (1; 21; 51; 81).

3. Dispositif d'étanchéité suivant l'une des revendications 1 et 2, caractérisé en ce que le premier tronçon de surface (10′; 33; 63; 93) se transforme par un tracé progressif, non progressif ou en gradin, dans le second tronçon de surface (10˝; 34; 64; 94).
